# EUROPÄISCHE PATENTSCHRIFT

(11) **EP 1 213 168 B1**
(45) Veröffentlichungstag und Bekanntmachung des Hinweises auf die Patenterteilung: **18.04.2007**
(21) Anmeldenummer: 01126819.0
(22) Anmeldetag: 10.11.2001
(51) Int. Cl.: B60J 7/057, B60J 7/00, B60J 7/043, B60J 7/047

(54) **Steuerung für ein motorisch über verschiedene Zwischenstadien öffnungsfähiges Fahrzeugdah mit zumindest einem als Drehschalter ausgebildeten Bedienelement**
Controller for a motor driven multistage open roof provided with a rotary switch as control device
Commande pour toit ouvrant de ouverture progressif actionné par un moteur avec un commutateur rotatif comme dispositif de commande

(30) Priorität: 07.12.2000 DE 10061187
(43) Veröffentlichungstag der Anmeldung: 12.06.2002
(73) Patentinhaber: Webasto Vehicle Systems International GmbH, 82131 Stockdorf (DE)
(72) Erfinder: Bauer, Bernd, 82223 Eichenau (DE); Schwanitz, Günther, 82362 Weilheim (DE)
(74) Vertreter: Wiese, Gerhard

(56) Entgegenhaltungen:
- WO-A-96/01192
- DE-A- 4 337 745
- DE-A- 4 431 061
- US-A- 5 749 617

## Beschreibung

Die Erfindung betrifft eine Steuerung für ein motorisch über verschiedene Zwischenstadien öffnungsfähiges Fahrzeugdach mit zumindest einem als Drehschalter ausgebildeten Bedienelement gemäß dem Oberbegriff des Patentanspruchs 1.

Eine derartige Steuerung ist aus der DE 44 11 388 C1 oder der parallelen US-A-5 749 617 bekannt. Dieses Bedienelement dient zur Steuerung eines komplexen öffnungsfähigen Fahrzeugdachs, welches zusätzlich einen zweiten Deckel, Säulen und Abdeckungselemente umfaßt, die sämtliche mittels separater Antriebe über den Drehschalter bei Drehbewegung in verschiedenen Umfangsbereichen zum Anfahren vorbestimmter Öffnungsstadien verstellbar sind, einschließlich einem Öffnungsstadium, in welchem das Fahrzeug als vollständig offenes Cabrio-Fahrzeug vorliegt. Das in dieser Druckschrift offenbarte Konzept zur Betätigung eines komplexen Fahrzeugdachs erlaubt eine komfortable einhändige Bedienung desselben.

Angesichts dieses Standes der Technik liegt der Erfindung die Aufgabe zugrunde, eine Steuerung der eingangs genannten Art für eine beschränkte Anzahl von Dachelementen eines öffnungsfähigen Dachs einschließlich eines Rollos für einen transparenten bzw. transluszenten Deckel zu schaffen, der eine komfortable einhändige Bedienung sämtlicher Elemente gewährleistet.

Gelöst wird diese Aufgabe durch die Merkmale des Anspruchs 1. Vorteilhafte Weiterbildungen der Erfindung sind in den Unteransprüchen angegeben.

Eine sichere Bedienung von relativ wenigen Dachelementen, nämlich Windabweiserlamelle, Deckel und Heckscheibe des öffnungsfähigen Fahrzeugdachs wird demnach erfindungsgemäß in Verbindung mit der sicheren, insbesondere störungs- und beschädigungsfreien Bedienbarkeit eines Rollos dadurch gewährleistet, daß der im Drehschalter enthaltene Drucktaster der manuellen Steuerung des unter dem durchsichtigen bzw. durchscheinenden Deckel angeordneten motorisch angetriebenen Rollos dient. Der Drucktaster erlaubt erfindungsgemäß eine Steuerung unter der Maßgabe, daß das Rollo ausschließlich bei vollständig geschlossenem Fahrzeugdach beliebig motorisch verfahrbar ist und vor einer Ausstellung von der Windabweiserlamelle und vor einem Verstellen des Deckels und der Heckscheibe vollständig aufgewickelt wird. Daraus ergibt sich einerseits eine problemlose motorische Steuerung des Rollos bei geschlossenem Fahrzeugdach und andererseits wird durch rechtzeitiges Aufrollen des Rollos verhindert, daß dieses Windlast bei geöffnetem oder teilweise geöffnetem Fahrzeugdach ausgesetzt ist.

Vorteilhafterweise kann der Drucktaster mit einer weiteren Dachsteuerfunktion versehen sein. Demnach ist gemäß einer vorteilhaften Weiterbildung der Erfindung vorgesehen, daß dem Drucktaster in Öffnungsposition des Fahrzeugdachs eine Schnell- oder Zentralschließfunktion für einen Gesamt-Schließvorgang aller Komponenten des Fahrzeugdachs zugeordnet ist.

Zwei vorteilhafte Varianten des Bedienelements kommen in Betracht. Gemäß einer ersten Variante, bei der der Drehschalter bei einer Drehbewegung die einzelnen Antriebe für die Dachelemente in verschiedenen Umfangsbereichen zum Anfahren vorbestimmter Öffnungspositionen des Fahrzeugdachs nacheinander ansteuert, ist vorgesehen, daß der Drehschalter zwischen einem Umfangsbereich zur Betätigung von Windabweiserlamelle und Deckel und andererseits dem Umfangsbereich zur Betätigung der Heckscheibe eine Neutralstellung besitzt, in welcher das Rollo mittels des Drucktasters manuell verfahrbar ist.

Als Variante ist bei dem Bedienelement vorgesehen, daß zwei konzentrische Drehschalter genutzt werden, von welchen ein innerer Drehschalter den Drucktaster zur Steuerung des Rollos enthält, wobei einer der beiden Drehschalter zur Betätigung von Windabweiserlamelle und Deckel und der andere Drehschalter zur Betätigung der Heckscheibe dienen, und wobei das Rollo über den Drucktaster nur dann manuell betätigbar ist, wenn der innere und der äußere Drehschalter beide eine einem vollständig geschlossenen Fahrzeugdach entsprechende Nullstellung einnehmen.

Bei dieser Variante zweier konzentrischer Drehschalter ist vorteilhafterweise zwischen beiden Drehscheiben ein feststehender Ring angeordnet, der Symbole zur Markierung von Schaltpositionen, beispielsweise in Gestalt von Piktogrammen, trägt. Auch bei dieser Auslegung des Bedienelements mit zwei konzentrischen Drehschaltern läßt sich eine Schnellschließfunktion zum manuellen Schließen des Fahrzeugdachs z.B. durch Drehen eines Drehschalters oder beider Drehschalter über die Nullstellung hinaus realisieren.

Die Drehschalter weisen bevorzugt Rastpositionen auf, um vorbestimmte Öffnungspositionen des Fahrzeugdachs gezielt wiederholbar ansteuern zu können.

Bei einer verknüpften Ansteuerung mehrerer Antriebe zur Betätigung der jeweiligen Dachelemente und des Rollos können verschiedene Strategien zur Anwendung gelangen. Beispielsweise kann eine Auswertung des Bedienelements durch mehrere Steuerungen gleichzeitig vorgesehen sein. Bestimmte Schaltstellungen sind dabei logisch nur einem Antrieb zugeordnet, so daß die jeweilige Steuerung für sich allein entscheidet, ob auf eine Bedienanforderung zu reagieren ist. Alternativ verfolgt eine Auswertung des Bedienelements durch eine einzige Steuerung und Weitergabe von Verstellanforderungen an weitere Steuerungen. Hierbei ist beispielsweise vorgesehen, daß jede Schaltstellung einer bestimmten Stellung der Dachelemente zugeordnet ist. Je nach Stellung des Bedienelements werden von einer Hauptsteuerung aus die einzelnen Antriebe in passender Abfolge angesteuert. Außerdem kann vorgesehen sein, daß einige spezielle Schalterstellungen situationsabhängig entweder den einen oder den anderen Antrieb für die Dachelemente steuern.

Nachfolgend wird die Erfindung anhand der Zeichnung beispielhaft näher erläutert; es zeigt:
- Fig. 1: eine Draufsicht einer ersten Ausführungsform des erfindungsgemäßen Bedienelements,
- Fig. 2: eine Draufsicht einer zweiten Ausführungsform des erfindungsgemäßen Bedienelements,
- Fig. 3: schematisch eine Längsschnittansicht eines öffnungsfähigen Fahrzeugdachs, welches über das Bedienelement gemäß Fig. 1 und 2 motorisch über verschiedene Zwischenstadien öffnungsfähig ist, im geschlossenen Zustand,
- Fig. 4A bis 4E: verschiedene Öffnungsstadien des Deckels des Fahrzeugdachs und
- Fig. 5A bis 5C: verschiedene Öffnungsstadien des Heckfensters des Fahrzeugdachs.

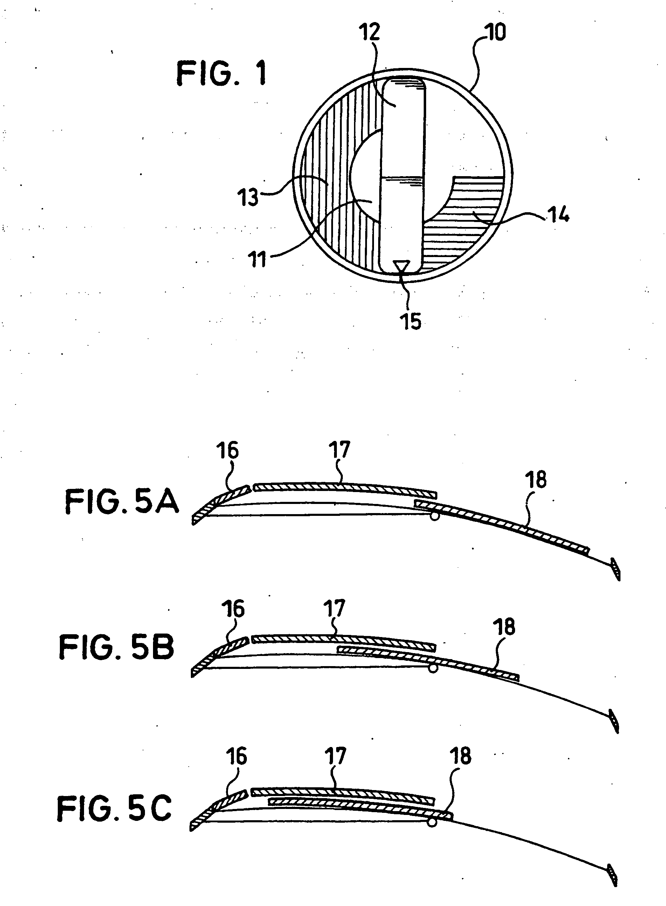

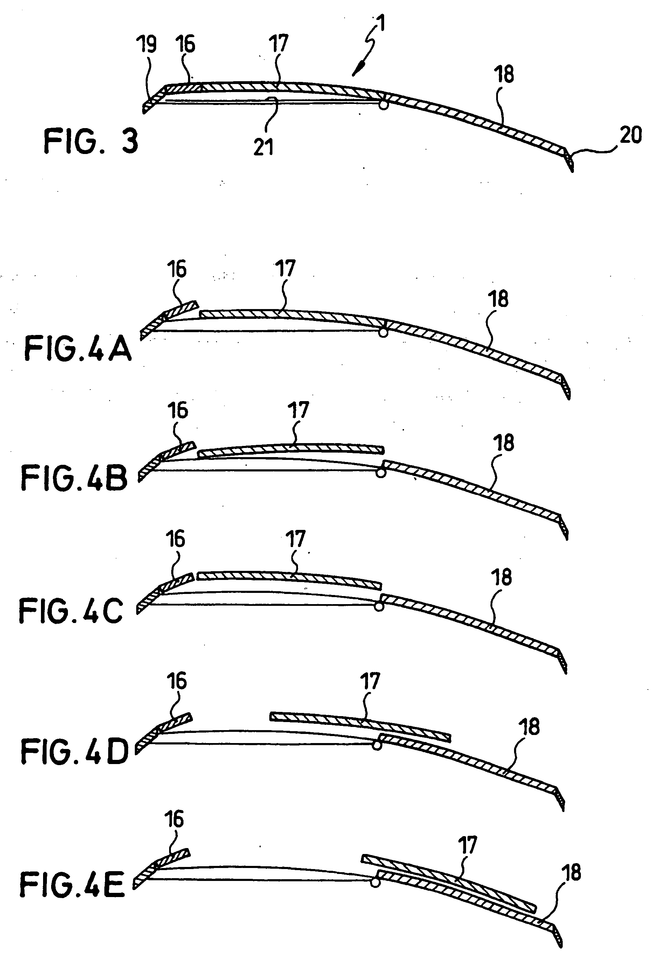

Das in Fig. 1 in einer ersten Ausführungsform dargestellte Bedienelement zur Betätigung eines öffnungsfähigen Fahrzeugdachs hat eine allgemein kreisförmige Konfiguration und umfaßt einen allgemein kreiszylindrischen Grundkörper 10, auch Konsole genannt, einen Drehschalter 11, der konzentrisch auf dem Grundkörper 10 angeordnet und in bezug auf diesen drehbar ist und einen Griff 12 aufweist, und einen kreissegmentförmigen ersten Schaltpositionsbereich 13 sowie einen entsprechenden zweiten Schaltpositionsbereich 14. Die beiden Schaltpositionsbereiche 13, 14 signalisieren Schaltpositionen des Drehschalters und können in entsprechend der beispielsweise in Fig. 2 dargestellter Weise mit Symbolen zur Bezeichnung der Schaltpositionen versehen sein. Der erste Schaltpositionsbereich 13 erstreckt sich bei der in Fig. 1 dargestellten Ausführungsform des Bedienelements über einen Kreisbogenbereich von ca. 180°, beispielsweise auf ein Zifferblatt einer Uhr bezogen vom Bereich 6.00 bis 12.00 Uhr. Im Gegenuhrzeigersinn schließt sich an den ersten Schaltpositionsbereich 13 der zweite Schaltpositionsbereich 14 an, der sich in bezug auf ein Zifferblatt über ca. 90° von 3.00 Uhr bis 6.00 Uhr erstreckt. In der 6.00-Uhr-Stellung nimmt der Drehschalter 11 mit seinem Griff 12 eine Neutralstellung bzw. Nullstellung ein, die mit der Bezugsziffer 15 bezeichnet ist, und auf welche ein Pfeilsymbol auf der Oberseite des Griffs 12 weist, wenn dieser sich in Neutralstellung befindet.

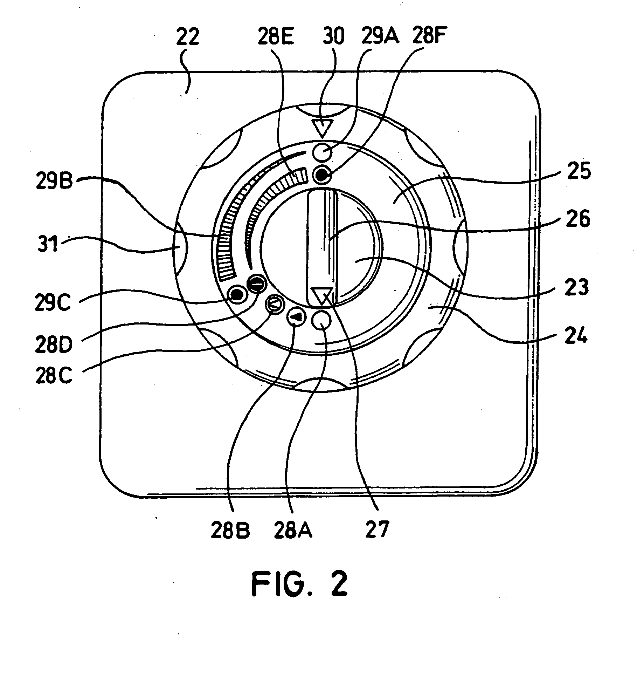

Der Griff 12 des Drehschalters 11 ist als Drucktaster ausgelegt, der um eine durch den Mittelpunkt des Griffes 12 verlaufende Querachse in Art einer Wippe in zwei unterschiedliche instabile Positionen überführbar ist, indem auf das eine bzw. das andere Ende dieses Drucktasters bzw. des Griffs 12 gedrückt wird. Die Funktionszuordnung der Elemente des Bedienelements ergibt sich nachfolgend aus einer Erläuterung von Fig. 3 in Verbindung mit Fig. 4A bis 4E, wobei der Drehschalter 11 zur Steuerung verschiedener Elemente eines öffnungsfähigen Fahrzeugdachs dient, während die Drucktaster- bzw. Wippenfunktion des Griffs 12 des Drehschalters 11 zur Steuerung eines Rollos 21 unterhalb eines transparenten Deckels 17 des Fahrzeugdachs vorgesehen ist. Durch Drehen des Griffs 12 des Drehschalters 11 im Uhrzeigersinn bei der Darstellung von Fig. 1, beispielsweise in eine erste Raststellung, alternativ in eine erste nicht gerastete Stellung, wird eine Windabweiserlamelle 16 mit ihrer Hinterkante ausgestellt, wodurch sich ein Lüftungsschlitz zwischen der Hinterkante der Windabweiserlamelle 16 und der Vorderkante des benachbart zu dieser angeordneten, verschiebbaren Deckels 17 ergibt. Noch vor Betätigung der Windabweiserlamelle 16, d.h., unmittelbar zu Beginn einer Schaltverstellung des Griffs 12 des Drehschalters 11, wird zunächst das Rollo 21 aufgerollt, damit dieses relativ windempfindliche Element keiner Belastung durch zu- oder abströmende Luft ausgesetzt ist. Dasselbe gilt für eine Betätigung des Griffs 12 des Drehschalters 11 im Gegenuhrzeigersinn, wie nachfolgend anhand von Fig. 5A bis 5C erläutert wird.

Fig. 3 zeigt das öffnungsfähige Fahrzeugdach 1 in vollständig geschlossener Position. Das öffnungsfähige Fahrzeugdach 1 umfaßt in Abfolge von vorn nach hinten eine Windabweiserlamelle 16, einen transparenten Deckel 17 und ein Heckfenster 18. Diese Elemente 16, 17 und 18 des öffnungsfähigen Fahrzeugdachs 1 liegen im geschlossenen Zustand bündig innerhalb des festen Fahrzeugdachs, welches anschließend an den Vorderrand der Windabweisertamette 16 von einem Windlauf 19 gebildet wird und anschließend an den unteren Rand des Heckfensters' 18 von einer Heckschürze oder einer Heckklappe 20 begrenzt wird. Die Elemente 16, 17 und 18 sind vorzugsweise aus Glas oder einem transparenten Kunststoff gefertigt, so daß das Fahrzeugdach 1 in geschlossenem Zustand von einer durchgehenden Glasfläche gebildet wird.

Unterhalb des transparenten Deckels 17 befindet sich das Rollo 21, welches sich bei geschlossenem Fahrzeugdach in zugezogener, den Deckel 17 von unten abdeckender Stellung oder in geöffneter Stellung befindet. Sowohl das Rollo 21 wie die beweglichen Teile des Fahrzeugdachs, der Deckel 17, das Heckfenster 18 und die Windabweiserlamelle 16, sind motorisch betätigbar, und zwar bevorzugt mittels separater Antriebe, welche über das Bedienelement von Fig. 1 (alternativ dasjenige gemäß Fig. 2) steuerbar sind. Ein derartiges Fahrzeugdach ist aus der DE 199 08 253 A1 prinzipiell bekannt.

Die Steuerung des öffnungsfähigen Fahrzeugdachs und des Rollos 21 mit Hilfe des in Fig. 1 gezeigten Bedienelements wird nunmehr unter bezug auf Fig. 4A bis 4E erläutert, welche Elemente ausgehend von der in Fig. 3 gezeigten Schließstellung des Fahrzeugdachs kontinuierlich und/oder diskret in unterschiedliche Öffnungsstadien überführbar sind.

Die geschlossene Position des Fahrzeugdachs, die in Fig. 3 gezeigt ist, entspricht der Stellung des Drehschalters 11 von Fig. 1, d.h., der Neutralstellung des Drehschalters 11, in der dessen Griff 12 mit seiner Pfeilmarkierung auf die Neutralstellung 15 weist.

Ausgehend von dieser Neutralstellung 15 wird durch Drehen des Drehschalters 11 im Uhrzeigersinn in einem ersten Winkelbereich (auf einem Zifferblatt etwa dem Bereich zwischen 6.00 und 8.00 Uhr) ein stufenloses oder über mehrere Zwischenrasten erfolgendes Öffnen der Windabweiserlamelle 16 entsprechend Fig. 4A eingeleitet.

Wie bereits weiter oben erläutert, geht diesem Ausstellen der Windabweislamelle 16 bevorzugt ein automatisches Öffnen des Rollos 21 voraus. Die in Fig. 4B gezeigte Position des Fahrzeugdachs entspricht einer weiteren auf die Drehstellung gemäß Fig. 4A folgende Drehstellung des Griffs 12 des Drehschalters 11. Diese auf einem Zifferblatt einer Uhr beispielsweise der 9.00 h Stellung entsprechende Drehstellung entspricht bei weiterhin aufgestellter Windabweiserlamelle 16 einer ersten Öffnungsposition des Deckels 17, d.h., ausgehend von der geschlossenen Position des Deckels 17 einer angehobenen Position der Hinterkante des Dekkels 17.

Die in Fig. 4C, gezeigte Position des Fahrzeugdachs entspricht einer im Uhrzeigersinn auf die Position von Fig. 4 B folgende Position des Griffs 12 des Drehschalters 11, bei der auch die Vorderkante des Deckels 17 angehoben ist, so daß der Deckel 17 sich nunmehr bei weiterhin sich in aufgestellter Position befindlicher Windabweiserlamelle 16 in einer Ausrichtung befindet, die es gestattet, den Deckel 17 über entsprechende nicht dargestellte Führungsmittel rückwärts über das Heckfenster 18 zu schieben. Die auf einem Zifferblatt dem Bereich zwischen 9.00 und 12.00 h entsprechenden Positionen des Griffs 12 des Drehschalters 11 korrespondieren zu Deckelstellungen, die in Fig. 4D und 4E gezeigt sind, in welchen der Deckel 17 stufenlos oder über mehrere Zwischenrasten zuletzt vollständig über das Heckfenster 18 verfahren ist.

Bei sämtlichen in Fig. 4A bis 4E gezeigten Stellungen der Windabweiserlamelle 16 und des Deckels 17 unterbindet eine nicht gezeigte Steuereinrichtung jegliche motorische Betätigung des Rollos 21 und der Heckscheibe 18, um das Rollo 21 keiner unnötigen Windbelastung auszusetzen, und um zu verhindern, daß die Heckscheibe 18 in Kollision mit dem Deckel 17 gelangt. Eine motorische Verstellung der Heckscheibe 18 über den Drehschalter wird von der Steuerschaltung erst dann zugelassen, wenn die Windabweiserlamelle 16 und der Deckel 17 in die in Fig. 3 gezeigte Schließposition überführt sind, indem der Griff 12 des Drehschalters 11 im Gegenuhrzeigersinn in seine Neutralstellung 15 überführt ist. Ausgehend von der dann wieder erreichten Neutralstellung 15 läßt sich der Griff 12 des Drehschalters 11 im Gegenuhrzeigersinn innerhalb des zweiten Schaltpositionsbereichs 14 bewegen, um die Heckscheibe 18 stufenlos oder über mehrere Zwischenrasten beispielsweise in ihre offene Stellung zu verfahren, wie in Fig. 5A bis 5C gezeigt ist.

Jegliche Betätigung des Griffs 12 des Drehschalters 11 im Gegenuhrzeigersinn ausgehend von der Neutralstellung 15 hat zur Folge, daß als erstes das Rollo 21 aufgerollt wird, woraufhin als nächstes ein Hochstellen der Hinterkante des Dekkels 17 erfolgt, um unterhalb des Deckels 17 Platz freizugeben für die daraufhin bei einer weiteren Betätigung des Griffs 12 im Gegenuhrzeigersinn erfolgende Verstellung des Heckfensters 18 in Öffnungsrichtung. Der Beginn dieser Verstellbewegung des Heckfensters 18 mit unterhalb der Hinterkante des Deckels 17 angeordnetem Heckfenster 18 ist in Fig. 5A gezeigt. Eine fortgeschrittene Zwischenposition vor der vollständigen Öffnung des Heckfensters ist in Fig. 5B gezeigt, bei der die Vorderkante des Heckfensters ungefähr unterhalb der Mitte des Deckels 17 zu liegen kommt. Fig. 5C zeigt schließlich die Endstellung des Heckfensters 18, bei der die Vorderkante des Heckfensters 18 in etwa im Bereich der Vorderkante des Deckels 17 zu liegen kommt, während die Hinterkante des Heckfensters 18 in etwa im Bereich der Hinterkante des Deckels 17 zu liegen kommt.

Das Schließen des Heckfensters 18 erfolgt bei Drehung des Griffs 12 des Drehschalters 11 im Uhrzeigersinn bis in die Neutralstellung 15.

Wie vorstehend bereits angesprochen, ist eine motorische Betätigung des Rollos 21 ausschließlich bei vollständig geschlossenem öffnungsfähigen Fahrzeugdach 1 möglich, nämlich dann, wenn sich der Griff 12 des Drehschalters 11 in Neutralstellung 15 befindet. In diesem Fall ist das Rollo 21 durch Antippen des einen oder anderen Endes des Griffs 12, der dabei in Art einer Wippe verkippt ist in beliebige Position motorisch einstellbar (in den Figuren im einzelnen nicht dargestellt).

Bevorzugt ist in Verbindung mit dem in Fig. 1 gezeigten Bedienelement auch eine Zentral- oder Schnellschließfunktion zum Schließen aller geöffneten Teile des Fahrzeugdachs bereitgestellt. Zur Aktivierung der Schnellschließfunktion ist vorteilhafterweise der wippenartig verstellbare Drucktaster in Gestalt des entsprechend gelagerten Griffs 12 des Drehschalters 11 vorgesehen, der bei geschlossenem Dach zur Betätigung des Rollos 21 dient. Zwei Varianten für die Schnellschließfunktion sind möglich. Gemäß einer Variante führt die Betätigung jedes Endes des Wippschalters dazu, daß sämtliche gerade geöffneten Dachelemente, d.h. Deckel 17 oder Heckfenster 18, in Schließstellung verfahren. Alternativ kann vorgesehen sein, daß das eine Wippenende zum Zufahren der Heckscheibe 18 und das andere Wippenende zum Zufahren des Deckels 17 in Verbindung mit dem Schließen der Windabweiserlamelle 16 dient.

Fig. 2 zeigt eine zu Fig. 1 alternative Ausführungsform des Bedienelements. Dieses Bedienelement besteht aus einem rechteckigen Grundkörper 22 und zwei konzentrisch zueinander auf dem Grundkörper 22 angeordneten Drehschaltern 23, 24, zwischen welchen ein feststehender Schaltpositionsanzeigering 25 angeordnet ist. Ähnlich wie der Drehschalter 11 in Fig. 1 umfaßt der innere Drehschalter 23 einen Griff 26 mit einem als Pfeil ausgebildeten Positionszeiger 27. Der feststehende Schaltpositionsanzeigering 25 ist mit mehreren Piktogrammen versehen, welche die Bezugsziffern 28A bis 28F und 29A bis 29C tragen, um Schaltpositionen bzw. Stellungen des öffnungsfähigen Dachs anzuzeigen. Außerdem ist auch auf dem äußeren Drehschalter 24 ein Pfeil als Positionszeiger 30 angeordnet.

Abgesehen vom hochstehenden Griff 26 verläuft die Oberseite des inneren Drehschalters 23 koplanar zur Oberseite des feststehenden Schaitpositionsanzeigerings 25. Im Bereich des Außenrands des äußeren Drehschalters 24 sind Griffmulden eingeformt, die über den Umfang gleichmäßig beabstandet sind, gleiche Form aufweisen, und von denen eine repräsentativ mit der Bezugsziffer 31 bezeichnet ist.

Die Zuordnung der Dachelemente zu diesem Bedienelement ist wie folgt: Der innere Drehschalter 23 dient zur Betätigung der Windabweiserlamelle 16 und des Deckels 17 und Positionen dieser beweglichen Elemente entsprechende Piktogramme sind anschließend an den Außenrand des inneren Drehschalters 23 auf dem Schaltpositionsanzeigering 25 angeordnet. Dabei entspricht der Kreis bei 28A der Schließposition oder Nullstellung, der Pfeil 28B dem Ausstellen der Windabweiserlamelle 16, der Pfeil 28C dem Ausstellen der Hinterkante des Deckels 17, die zwei parallelen Linien bei 28D dem Anheben auch der Vorderkante des Deckels 17 und der anwachsende Pfeil 28E dem fortschreitenden Öffnen des Deckels 17 bis zur vollständigen Öffnungsposition 28F. Der äußere Drehschalter 24 dient ausschließlich zur Bedienung des Heckfensters und der Öffnungsposition desselben entsprechende Piktogramme 29A bis 29C sind am Außenrand des Schaltpositionsanzeigerings 25 angeordnet.

Der Kreis 29A entspricht der Schließstellung, der im Gegenuhrzeigersinn anwachsende Pfeil 29B der zunehmenden Öffnung und der Kreis 29C der vollständigen Öffnung der Heckscheibe 18

Bei der dargestellten Ausführungsform kommt eine Betätigung des Rollos 21 durch Kippen des Griffs 26 ausschließlich dann in Betracht, wenn sämtliche Nullstellungssymbole 27, 28, 29, 30 miteinander fluchtend entlang einer gemeinsamen Linie angeordnet sind, wie in Fig. 2 gezeigt. Im übrigen erfolgt stets das Aufrollen des Rollos 21, sobald einer der Drehschalter 23, 24 betätigt wird. Die Kopplung der Schaltelemente 26, 23 und 24 zum Ausschluß unerwünschter Konstellationen oder gar Kollisionen kann entweder durch mechanische Blockierung am Schalter oder durch entsprechende Ausschlüsse in der Schaltlogik realisiert sein. Als Beispiel für eine mechanische Blockierung kann beispielsweise der Griff 26 für eine Betätigung des Rollos 21 nur in der Fig. 2 gezeigten Position gekippt werden, während bei Verdrehung eines der Drehschalter 23 bzw. 24 ein nicht gezeigter mitgedrehter Sperr-Ring die Kippung verhindert. Im übrigen verläuft die Steuerung des öffnungsfähigen Fahrzeugdachs wie vorstehend anhand von Fig. 4A bis 4E und Fig. 5A bis 5C erläutert.

Auch das in Fig. 2 gezeigte Bedienelement erlaubt eine Schnellschließung des Fahrzeugdachs. Diese Schnellschließung ist entweder so auslösbar, wie vorstehend anhand von Fig. 1 erläutert, nämlich mittels des als Wippe ausgebildeten Griffs 26, der dann beispielsweise axial nach unten gedrückt wird, oder alternativ hierzu durch Betätigung des inneren und/oder des äußeren Schalters 23 bzw. 24 im Gegenuhrzeigersinn, bevorzugt entgegen eines Druckwiderstands unter Überwindung desselben über die Nullstellung hinaus. Dabei kann ein im Notfall erforderliches Zufahren des Fahrzeugdachs durch Betätigung eines der Drehschalter 23, 24 oder durch beide erfolgen. Im letztgenannten Fall kann auch vorgesehen sein, daß mit dem einen Drehschalter der Deckel und die Windabweiserlamelle und mit dem anderen das Heckfenster geschlossen werden.

### Bezugszeichenliste

- 1: Fahrzeugdach
- 10: Grundkörper
- 11: Drehschalter
- 12: Griff
- 13: erster Schaltpositionsbereich
- 14: zweiter Schaltpositionsbereich
- 15: Neutralstellung
- 16: Windabweiserlamelle
- 17: Deckel
- 18: Heckfenster
- 19: Windlauf
- 20: Heckschürze
- 21: Rollo
- 22: Grundkörper
- 23: innerer Drehschalter
- 24: äußerer Drehschalter
- 25: Schaltpositionsanzeigering
- 26: Griff
- 27: Positionszeiger
- 28: Nullstellungssymbol
- 29: Nullstellungssymbol
- 30: Positionzeiger
- 31: Griffmulde

## Patentansprüche

1. Steuerung für ein motorisch über verschiedene Zwischenstadien öffnu ngsfähiges Fahrzeugdach mit zumindest einem als Drehschalter (11, 23, 24) ausgebildeten Bedienelement und mit um den Drehschalter (11 23, 24) herum angeordneten, das jeweilige Öffnungsstadium signalisierenden Schaltpositionen, wobei das Fahrzeugdach mehrere aufeinander folgende Dachkomponenten, wie eine Windabweiserlamelie (16), einen Deckel (17) und/oder ein Heckfenster (18)), umfaßt, die mittels separater Antriebe durch eine Drehbewegung des Drehschalters (11, 23, 24) zum Anfahren vorbestimmter Öffnungsstadien des Fahrzeugdachs betätigt sind, und mit einem als Wippe ausgelegten Drucktaster (12, 26), der in den Drehschalter (11, 23, 24) integriert ist, **dadurch gekennzeichnet, daß** der manuell betätigte Drucktaster (12, 26) im Betrieb der Steuerung ein unter dem durchsichtigen bzw. durchscheinenden Deckel (17) angeordnetes, motorisch antreibbares Rollo (21) steuert, wobei das Rollo (21) unter der Maßgabe gesteuert ist, daß es ausschließlich bei vollständig geschlossenem Fahrzeugdach beliebig verfahrbar ist und vor einer Ausstellung der Windabweiserlamelle (16) und vor einem Verstellen des Deckels (17) und/oder der Heckscheibe (18) in Öffnungsrichtung geöffnet wird.

2. Steuerung nach Anspruch 1, **dadurch gekennzeichnet, daß** der Drucktaster als ein in Art einer Wippe kippbarer Griff (12, 26) des Drehschalters (11, 23, 24) gebildet ist.

3. Steuerung nach Anspruch 1 oder 2, **dadurch gekennzeichnet, daß** dem Drucktaster (12, 26) In Öffnungspositionen des Fahrzeugdachs eine Notlauffunktion für einen Gesamt-Schließvorgang des Fahrzeugdachs zugeordnet ist.

4. Steuerung nach Anspruch 2 oder 3, **dadurch gekennzeichnet, daß** in der einen Wippstellung des Drucktasters (12, 26) die Windabweiserlamelle (16) und der Deckel (17) geschlossen werden und in der anderen Wippstellung des Drucktasters (12, 26) das Heckfenster (18) geschlossen wird.

5. Steuerung nach einem der Ansprüche 1 bis 4, **dadurch gekennzeichnet, daß** der Drehschalter (11) bei einer Drehbewegung die einzelnen Antriebe in verschiedenen Umfangsbereichen (13, 14) zum Anfahren vorbestimmter Öffnungsstadien des Fahrzeugdachs nacheinander ansteuert, und daß der Drehschalter (11) zwischen einem Umfangsbereich (13) zur Betätigung der Windabweiserlamelle (16) und des Deckels (17) und andererseits dem Umfangsbereich (14) zur Betätigung der Heckscheibe (18) eine Neutralstellung (15) besitzt, in welcher das Rollo (21) mittels des Drucktasters (12) manuell verfahrbar ist.

6. Steuerung nach einem der Ansprüche 1 bis 3, **dadurch gekennzeichnet, daß** zwei konzentrische Drehschalter (23, 24) vorgesehen sind, von welchen ein innerer Drehschalter (23) den Drucktaster (26) enthält, daß der eine Drehschalter (23) zur Betätigung der Windabweiserlamelle (16) und des Deckels (17) und der andere Drehschalter (24) zur Betätigung der Heckscheibe (18) vorgesehen sind, und daß das Rollo (21) über den Drucktaster (26) nur dann manuell betätigbar ist, wenn der innere und der äußere Drehschalter (23, 24) eine dem vollständig geschlossenem Fahrzeugdach entsprechende Nullstellung (27 bis 30) einnehmen.

7. Steuerung nach Anspruch 6, **dadurch gekennzeichnet, daß** zwischen den beiden Drehschaltern (23, 24) ein feststehender Ring (25) angeordnet ist, welcher Markierungen für die Schaltpositionen aufweist.

8. Steuerung nach Anspruch 6 oder 7, **dadurch gekennzeichnet, daß** dem inneren und/oder dem äußeren Drehschalter (23, 24) in der Nullstellung eine Notlauffunktion für einen manuellen Schließvorgang des Fahrzeugdachs durch Drehen des Drehschalters bzw. der Drehschalter über die Nullstellung hinaus zugeordnet ist.

9. Steuerung nach Anspruch 8, **dadurch gekennzeichnet, daß** dem einen Drehschalter (23 oder 24) die Notlauffunktion zum manuellen Schließen der Windabweiserlamelle (16) und des Deckels (17) und dem anderen Drehschalter (24 oder 23) die Notlauffunktion zum manuellen Schließen der Heckscheibe (18) zugeordnet ist.

10. Steuerung nach Anspruch 8 oder 9, **dadurch gekennzeichnet, daß** bei Drehen des Drehschalters bzw. der Drehschalter (23, 24) über die Nullstellung hinaus ein Widerstand zu überwinden ist.

11. Steuerung nach einem der Ansprüche 1 bis 10, **dadurch gekennzeichnet, daß** der bzw. die Drehschalter (23, 24) zur Bereitstellung diskreter Schaltpositionen als Rast-Drehschalter ausgelegt ist bzw. sind.

## Claims

1. Controller for a motor driven multistage openable vehicle roof provided with at least one operating element formed as a rotary switch (11, 23, 24) and having switching positions arranged around the rotary switch (11, 23, 24) and signalling the respective opening stages, the vehicle roof comprising a plurality of successive roof components, such as a wind deflector slat (16), a panel (17) and/or a rear window (18), which are actuated by means of separate drives by means of a rotational movement of the rotary switch (11, 23, 24) on order to approach predetermined opening stages of the vehicle roof, and having a pushbutton (12, 26) which is designed as a rocker and is integrated in the rotary switch (11, 23, 24), **characterized in that** the manually operated pushbutton (12, 26) is used during operation to control a roller blind (21) which is arranged under the transparent or translucent panel (17) and can be driven by a motor, the roller blind (21) being controlled under the stipulation that it can be moved as desired only when the vehicle roof is closed completely and is opened in the opening direction before the wind deflector slat (16) is raised and before a displacement of the panel (17) and/or the rear window (18).

2. Controller according to Claim 1, **characterized in that** the pushbutton is formed as a grip (12, 26) that can be tilted in the manner of a rocker in the rotary switch (11, 23, 24).

3. Controller according to Claim 1 or 2, **characterized in that**, in open positions of the vehicle roof, the pushbutton (12, 26) is assigned an emergency function for a total closing operation of the vehicle roof.

4. Controller according to Claim 2 or 3, **characterized in that**, in one rocker position of the pushbutton (12, 26), the wind deflector slat (16) and the panel (17) are closed and, in the other rocker position of the pushbutton (12, 26), the rear window (18) is closed.

5. Controller according to one of Claims 1 to 4, **characterized in that**, during a rotational movement, the rotary switch (11) activates the individual drives in various circumferential regions (13, 14) in order to approach predetermined opening stages of the vehicle roof one after another, and **in that**, between a circumferential region (13) for actuating the wind deflector slat (16) and the panel (17) and, on the other hand, the circumferential region (14) for actuating the rear window (18), the rotary switch (11) has a neutral position (15), in which the roller blind (21) can be moved manually by means of the pushbutton (12).

6. Controller according to one of Claims 1 to 3, **characterized in that** two concentric rotary switches (23, 24) are provided, of which an inner rotary switch (23) contains the pushbutton (26), **in that** the one rotary switch (23) is provided for actuating the wind deflector slat (16) and the panel (17), and the other rotary switch (24) is provided for actuating the rear window (18), and **in that** the roller blind (21) can be actuated manually via the pushbutton (26) only when the inner and the outer rotary switches (23, 24) assume a zero position (27 to 30) corresponding to the completely closed vehicle roof.

7. Controller according to Claim 6, **characterized in that** between the two rotary switches (23, 24) there is arranged a stationary ring (25) which has markings for the switching positions.

8. Controller according to Claim 6 or 7, **characterized in that** the inner and/or the outer rotary switch (23, 24), when in the zero position, is assigned an emergency function for a manual closing operation of the vehicle roof as a result of rotation of the rotary switch or the rotary switches beyond the zero position.

9. Controller according to Claim 8, **characterized in that** the one rotary switch (23 or 24) is assigned the emergency function for the manual closing of the wind deflector slat (16) and the panel (17), and the other rotary switch (24 or 23) is assigned the emergency function for the manual closing of the rear window (18).

10. Controller according to Claim 8 or 9, **characterized in that**, when the rotary switch or the rotary switches (23, 24) are rotated beyond the zero position, a resistance has to be overcome.

11. Controller according to one of Claims 1 to 10, **characterized in that** the rotary switch or switches (23, 24) is or are designed as a latching rotary switch in order to provide discrete switching positions.

## Revendications

1. Commande pour un toit ouvrant de véhicule pouvant être ouvert par moteur en passant par différents stades intermédiaires, avec au moins un élément de manoeuvre réalisé sous forme de commutateur rotatif (11, 23, 24) et avec des positions de commutation disposées tout autour du commutateur rotatif (11, 23, 24) et signalant le stade d'ouverture respectif, sachant que le toit de véhicule comporte plusieurs éléments de toit successifs, tels qu'une lamelle déflectrice (16), un panneau (17) et/ou une lunette arrière (18), qui sont actionnés par l'intermédiaire d'entraînements séparés par un mouvement de rotation du commutateur rotatif (11, 23, 24) afin d'atteindre des stades d'ouverture prédéfinis du toit de véhicule, et avec un bouton-poussoir (12, 26) réalisé sous forme de bascule et intégré dans le commutateur rotatif (11, 23, 24), **caractérisée en ce que** le bouton-poussoir (12, 26) à actionnement manuel, quand la commande est en service, commande un store (21) pouvant être entraîné par moteur et disposé sous le panneau (17) transparent ou translucide, le store (21) étant commandé sous la condition qu'il peut être déplacé à volonté uniquement lorsque le toit de véhicule est totalement fermé et qu'il est ouvert avant un relevage de la lamelle déflectrice (16) et avant un déplacement du panneau (17) et/ou de la lunette arrière (18) dans la direction d'ouverture.

2. Commande selon la revendication 1, **caractérisée en ce que** le bouton-poussoir est réalisé sous la forme d'une poignée (12, 26) du commutateur rotatif (11, 23, 24) qui peut être basculée à la manière d'une bascule.

3. Commande selon la revendication 1 ou 2, **caractérisée en ce qu'**une fonction de secours pour un processus de fermeture totale du toit de véhicule est affectée au bouton-poussoir (12, 26) dans les positions ouvertes du toit de véhicule.

4. Commande selon la revendication 2 ou 3, **caractérisée en ce que** la lamelle déflectrice (16) et le panneau (17) sont fermés dans l'une des positions basculées du bouton-poussoir (12, 26), et la lunette arrière (18) est fermée dans l'autre position basculée du bouton-poussoir (12, 26).

5. Commande selon l'une des revendications 1 à 4, **caractérisée en ce que** le commutateur rotatif (11), lors d'un mouvement de rotation, asservit successivement les différents entraînements dans différentes régions (1,3, 14) de son pourtour afin d'atteindre des stades d'ouverture prédéfinis du toit de véhicule, et **en ce que** le commutateur rotatif (11) possède, entre une région de pourtour (13) pour l'actionnement de la lamelle déflectrice (16) et du panneau (17) et d'autre part la région de pourtour (14) pour l'actionnement de la lunette arrière (18), une position neutre (15) dans laquelle le store (21) peut être déplacé manuellement au moyen du bouton-poussoir (12).

6. Commande selon l'une des revendications 1 à 3, **caractérisée en ce qu'**il est prévu deux commutateurs rotatifs concentriques (23, 24) parmi lesquels un commutateur rotatif intérieur (23) contient le bouton-poussoir (26), **en ce que** le premier commutateur rotatif (23) est prévu pour l'actionnement de la lamelle déflectrice (16) et du panneau (17) et l'autre commutateur rotatif (24) pour l'actionnement de la lunette arrière (18), et **en ce que** le store (21) peut être actionné manuellement au moyen du bouton-poussoir (26) uniquement quand les commutateurs rotatifs intérieur et extérieur (23, 24) prennent une position neutre (27 à 30) correspondant au toit de véhicule totalement fermé.

7. Commande selon la revendication 6, **caractérisée en ce qu'**une bague fixe (25), qui présente des repères pour les positions de commutation, est disposée entre les deux commutateurs rotatifs (23, 24).

8. Commande selon la revendication 6 ou 7, **caractérisée en ce qu'**on affecte au commutateur rotatif intérieur (23) et/ou au commutateur rotatif extérieur (24), dans la position neutre, une fonction de secours pour un processus de fermeture manuelle du toit de véhicule par rotation du ou des commutateurs rotatifs au-delà de la position neutre.

9. Commande selon la revendication 8, **caractérisée en ce qu'**on affecte à l'un des commutateurs rotatifs (23 ou 24) la fonction de secours pour la fermeture manuelle de la lamelle déflectrice (16) et du panneau (17), et à l'autre commutateur rotatif (24 ou 23) la fonction de secours pour la fermeture manuelle de la lunette arrière (18).

10. Commande selon la revendication 8 ou 9, **caractérisée en ce qu'**il faut vaincre une résistance pour la rotation du ou des commutateurs rotatifs (23, 24) au-delà de la position neutre.

11. Commande selon l'une des revendications 1 à 10, **caractérisée en ce que** le ou les commutateurs rotatifs (23, 24) est ou sont conçus sous la forme de commutateurs rotatifs à crans afin de fournir des positions de commutation discrètes.
